# EUROPEAN PATENT APPLICATION

(11) **EP 4 596 209 A1**
(43) Date of publication of application: **06.08.2025**
(21) Application number: 22960847.6
(22) Date of filing: 28.09.2022
(51) Int. Cl.: B29C 45/14

(54) **INSERT-MOLDED ARTICLE AND SENSOR DEVICE**

(71) Applicant: JTEKT Corporation, Kariya-shi, Aichi 448-8652 (JP); Japan Automatic Machine Co., Ltd., Tokyo 146-0092 (JP)
(72) Inventor: NONOYAMA, Toshio, Kariya-shi, Aichi 448-8652 (JP); TOYAMA, Yuichi, Kariya-shi, Aichi 448-8652 (JP); KUMAKURA, Atsushi, Tokyo 146-0092 (JP)
(74) Representative: Winter, Brandl - Partnerschaft mbB
(86) International application number: PCT/JP2022/036095
(87) International publication number: WO 2024/069784

(57) **Abstract**

An insert molding product (90) includes a terminal (48) configured to be connected to a board (47), and a resin member (40A) that covers part of the terminal (48). The terminal (48) includes a pin (48A) configured to be connected to the board (47), a connection portion (48B) configured such that an electric wire (46) is connected, and a coupling portion (48C) that couples the pin (48A) and the connection portion (48B). The coupling portion (48C) includes a projecting portion (82) that projects laterally in a direction orthogonal to a direction from the connection portion (48B) to the pin (48A). The resin member (40A) covers at least the coupling portion (48C) of the terminal (48).

## Description

### TECHNICAL FIELD

The present disclosure relates to an insert molding product and a sensor device.

### BACKGROUND ART

For example, a torque sensor of Patent Document 1 includes a sensor board, a harness, and a board holder. The board holder houses part of the harness and the sensor board. The harness is led from the inside to the outside of the board holder. The inner end of the harness is connected to the sensor board via a terminal. The terminal is fixed to the sensor board while extending through the sensor board in a thickness direction.

### Related Art Documents

### Patent Documents

Patent Document 1: Japanese Unexamined Patent Application Publication No. 2017-075920 (JP 2017-075920 A)

### SUMMARY OF THE INVENTION

### Problem to be Solved by the Invention

When the sensor of the type in which the harness is led to the outside of the board holder, such as the torque sensor of Patent Document 1, is attached to, for example, a mechanical device to which it is to be mounted, a tensile force may act on the harness due to wire connection work at the outer end of the harness, etc. The tensile force is a force in a direction in which the harness is pulled out. When the tensile force acts on the harness, there is a concern that the tensile force may be transmitted to the terminal to affect the connection portion between the terminal and the sensor board.

### Means for Solving the Problem

An insert molding product according to one aspect of the present disclosure includes a terminal configured to be connected to a board, and a resin member that covers part of the terminal. The terminal includes a pin configured to be connected to the board, a connection portion configured such that an electric wire is connected, and a coupling portion that couples the pin and the connection portion. The coupling portion includes a projecting portion that projects laterally in a direction orthogonal to a direction from the connection portion to the pin. The resin member covers at least the coupling portion of the terminal.

A sensor device according to one aspect of the present disclosure includes the insert molding product described above.

### BRIEF DESCRIPTION OF THE DRAWINGS

[FIG. 1] FIG. 1 is an exploded perspective view of a sensor device according to an embodiment.
[FIG. 2] FIG. 2 is an exploded perspective view of a detection unit according to the embodiment.
[FIG. 3] FIG. 3 is a perspective view of a board-in connector according to the embodiment.
[FIG. 4] FIG. 4 is an exploded perspective view of the board-in connector according to the embodiment.
[FIG. 5] FIG. 5 is a front view of a terminal according to the embodiment.
[FIG. 6] FIG. 6 is a perspective view of the terminal according to the embodiment.
[FIG. 7] FIG. 7 is a side view of the terminal according to the embodiment.
[FIG. 8] FIG. 8 is a sectional view of the board-in connector according to the embodiment.
[FIG. 9] FIG. 9 is a sectional view of an insert molding product according to the embodiment.
[FIG. 10] FIG. 10 is a perspective view showing a first range and a second range of each terminal according to the embodiment.
[FIG. 11] FIG. 11 is a side view showing a projection region of the terminal according to the embodiment.
[FIG. 12] FIG. 12 is a side view of a terminal according to another embodiment.
[FIG. 13] FIG. 13 is a side view of a terminal according to another embodiment.
[FIG. 14] FIG. 14 is a perspective view of a terminal according to another embodiment.
[FIG. 15] FIG. 15 is a front view of a terminal according to another embodiment.

### MODES FOR CARRYING OUT THE INVENTION

A sensor device according to an embodiment will be described. The sensor device is, for example, a torque sensor.

### <Overall Configuration of Sensor Device 10>

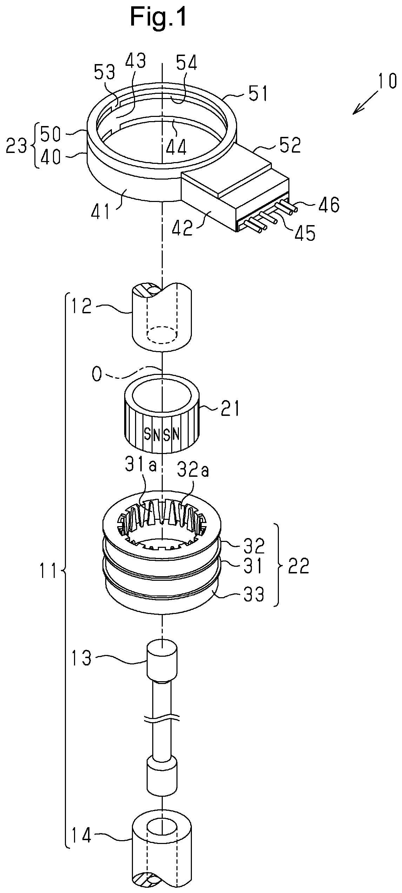

As shown in FIG. 1, a sensor device 10 is provided on a rotation shaft 11 that is a target to be detected. The rotation shaft 11 includes an input shaft 12, a torsion bar 13, and an output shaft 14. The input shaft 12 and the output shaft 14 are coupled to each other via the torsion bar 13. The input shaft 12, the torsion bar 13, and the output shaft 14 are positioned on the same axis O. The rotation shaft 11 is, for example, a steering shaft that constitutes a steering device of a vehicle. A steering wheel is coupled to the steering shaft so as to be rotatable together with the steering shaft.

The sensor device 10 detects torque applied to the rotation shaft 11 through operation on the steering wheel. The sensor device 10 includes a permanent magnet 21, a magnetic yoke 22, and a detection unit 23.

The permanent magnet 21 has a tubular shape and a circular sectional shape. The permanent magnet 21 is magnetized so that south poles and north poles alternate in a circumferential direction. The inner peripheral surface of the permanent magnet 21 is fitted and fixed to the outer peripheral surface of the input shaft 12. The permanent magnet 21 is rotatable together with the input shaft 12.

The magnetic yoke 22 has a tubular shape and a circular sectional shape. The permanent magnet 21 is inserted and maintained inside the magnetic yoke 22. The magnetic yoke 22 includes a first yoke 31, a second yoke 32, and a holder 33. The first yoke 31 and the second yoke 32 are annular members each made of a magnetic material. The first yoke 31 and the second yoke 32 are arranged along the axis O of the rotation shaft 11. The magnetic yoke 22 is formed by molding the first yoke 31 and the second yoke 32 with synthetic resin. The holder 33 is a portion of the magnetic yoke 22 that is made of synthetic resin. The holder 33 maintains the positional relationship between the first yoke 31 and the second yoke 32. The magnetic yoke 22 is fixed to the output shaft 14.

The first yoke 31 includes a plurality of teeth 31a. The teeth 31a are arranged at equal intervals in the circumferential direction of the first yoke 31. The second yoke 32 includes a plurality of teeth 32a. The teeth 32a are arranged at equal intervals in the circumferential direction of the second yoke 32. The teeth 31a and the teeth 32a extend opposite to each other in directions along the axis O of the rotation shaft 11. The teeth 31a and the teeth 32a are disposed alternately in the circumferential direction of the first yoke 31 and the second yoke 32. When no torsional deformation occurs in the torsion bar 13, the circumferential center of each of the teeth 31a, 32a coincides with the boundary between the north pole and the south pole of the permanent magnet 21. The permanent magnet 21, the first yoke 31, and the second yoke 32 form a magnetic circuit.

The detection unit 23 generates an electric signal according to the torsion amount of the torsion bar 13. The detection unit 23 includes a first sensor housing 40 and a second sensor housing 50. The first sensor housing 40 and the second sensor housing 50 are assembled in an axial direction.

The first sensor housing 40 is a resin molded product. The first sensor housing 40 includes a first housing body 41 and a first protrusion 42. The first housing body 41 has a tubular shape and has a first insertion hole 43 extending through the first housing body 41 in the axial direction. The bore diameter of the first insertion hole 43 is slightly larger than the outside diameter of the magnetic yoke 22. The portion of the magnetic yoke 22 provided with the first yoke 31 is maintained in a state in which it is inserted into the first insertion hole 43 in the axial direction. The first protrusion 42 has a rectangular parallelepiped shape and protrudes radially outward from the outer peripheral surface of the first housing body 41.

The first housing body 41 is provided with a first magnetic flux collecting ring 44. The first magnetic flux collecting ring 44 has an arcuate plate shape curved along the inner peripheral surface of the first insertion hole 43. The inner peripheral surface of the first magnetic flux collecting ring 44 is exposed to the inside of the first insertion hole 43. The first magnetic flux collecting ring 44 is held at a position corresponding to the first yoke 31 in the axial direction. The first magnetic flux collecting ring 44 surrounds the first yoke 31. The first magnetic flux collecting ring 44 guides a magnetic flux from the first yoke 31.

A board-in connector 45 is provided inside the first protrusion 42. A first end of the board-in connector 45 is exposed to the outside. The first end is an end of the board-in connector 45 opposite to the first housing body 41 in a radial direction. The board-in connector 45 holds a plurality of electric wires 46. The electric wire 46 is, for example, a coated wire in which a core wire is coated with an insulator. The plurality of electric wires 46 is disposed at intervals in a direction orthogonal to the direction in which the first protrusion 42 projects. A first end of the electric wire 46 is led from the first end of the board-in connector 45 to the outside. The first end is connected to an external device. The external device is, for example, a control device of the steering device.

The first magnetic flux collecting ring 44 and the board-in connector 45 are provided integrally with the first sensor housing 40 by insert molding. The Insert molding is a molding technique in which an insert is placed into an open mold and then the mold is closed to perform injection molding. The first magnetic flux collecting ring 44 and the board-in connector 45 are inserts.

The second sensor housing 50 is a resin molded product. The second sensor housing 50 includes a second housing body 51 and a second protrusion 52. The second housing body 51 has a tubular shape and has a second insertion hole 53 extending through the second housing body 51 in the axial direction. The bore diameter of the second insertion hole 53 is the same as the bore diameter of the first insertion hole 42 and is slightly larger than the outside diameter of the magnetic yoke 22. The portion of the magnetic yoke 22 provided with the second yoke 32 is maintained in a state in which it is inserted into the second insertion hole 53 in the axial direction. The second protrusion 52 has a rectangular flat plate shape and protrudes radially outward from the outer peripheral surface of the second housing body 51. The second protrusion 52 is laid over the first protrusion 42 in the axial direction.

The second housing body 51 is provided with a second magnetic flux collecting ring 54. The second magnetic flux collecting ring 54 is provided integrally with the second sensor housing 50 by insert molding similarly to the first magnetic flux collecting ring 44. The second magnetic flux collecting ring 54 has an arcuate plate shape curved along the inner peripheral surface of the second insertion hole 53. The inner peripheral surface of the second magnetic flux collecting ring 54 is exposed to the inside of the second insertion hole 53. The second magnetic flux collecting ring 54 is held at a position corresponding to the second yoke 32 in the axial direction. The second magnetic flux collecting ring 54 surrounds the second yoke 32. The second magnetic flux collecting ring 54 guides a magnetic flux from the second yoke 32.

### <Supplementary Description of Detection Unit 23>

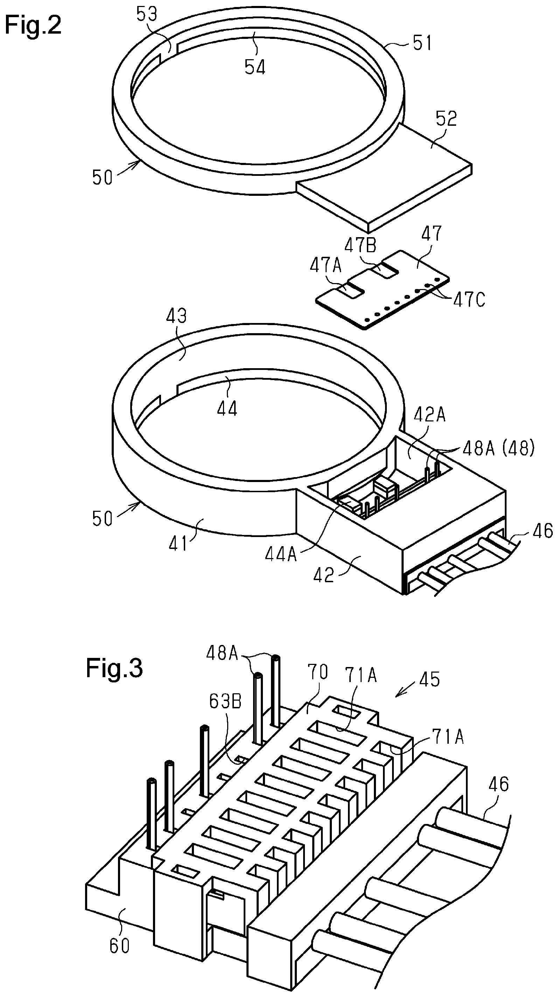

As shown in FIG. 2, the first protrusion 42 includes a board housing portion 42A. The board housing portion 42A is open in the axial direction. The opening of the board housing portion 42A is closed by the second protrusion 52. Two first magnetic flux collecting protrusions 44A are exposed inside the board housing portion 42A. The first magnetic flux collecting protrusion 44A is part of the first magnetic flux collecting ring 44. The first magnetic flux collecting protrusion 44A protrudes outward from the peripheral wall of the first housing body 41. Pins 48A of a plurality of terminals 48 described later are disposed inside the board housing portion 42A. The terminal 48 is attached to a second end of the electric wire 47. The pin 48A extends in the axial direction. The plurality of pins 48A is arranged in a row along a long side direction of the board housing portion 42A.

A board 47 is housed inside the board housing portion 42A. The board 47 has, for example, a rectangular flat plate shape. The board 47 includes a first magnetic sensor 47A, a second magnetic sensor 47B, and a plurality of terminal connection holes 47C. The first magnetic sensor 47A and the second magnetic sensor 47B are arranged along a first long side of the board 47. The first magnetic sensor 47A and the second magnetic sensor 47B are sensors for detecting the rotation angle of the rotation shaft 11 and are, for example, Hall sensors. The rotation angle of the rotation shaft 11 is a physical quantity related to the rotational motion of the rotation shaft 11. The plurality of terminal connection holes 47C is arranged in a row along a second long side of the board 47. The pin 48A is inserted into the terminal connection hole 47C. The pin 48A is joined to the board 47 by soldering.

Although illustration is omitted, the second magnetic flux collecting ring 54 has two second magnetic flux collecting protrusions similarly to the first magnetic flux collecting ring 44. The second magnetic flux collecting protrusions are disposed along the surface of the second protrusion 52 that faces the board housing portion 42A. The second magnetic flux collecting protrusion protrudes outward from the peripheral wall of the second housing body 51. The second magnetic flux collecting protrusion faces the first magnetic flux collecting protrusion 44A in the axial direction. The first magnetic sensor 47A and the second magnetic sensor 47B are interposed between the first magnetic flux collecting protrusions 44A and the second magnetic flux collecting protrusions. The first magnetic sensor 47A detects a magnetic flux guided to the first magnetic flux collecting ring 44. The second magnetic sensor 47B detects a magnetic flux guided to the second magnetic flux collecting ring 52.

When torque is applied to the input shaft 12, the torsion bar 13 undergoes torsional deformation. A relative rotational displacement occurs between the input shaft 12 and the output shaft 14 according to the torque applied to the input shaft 12. Then, the relative positions of the permanent magnet 21 and the first yoke 31 in the rotational direction change. Therefore, the magnetic flux guided from the permanent magnet 21 to the first magnetic flux collecting ring 44 through the first yoke 31 changes. Further, the relative positions of the permanent magnet 21 and the second yoke 32 in the rotational direction change. Therefore, the magnetic flux guided from the permanent magnet 21 to the second magnetic flux collecting ring 54 through the second yoke 32 changes.

The first magnetic sensor 47A and the second magnetic sensor 47B each generate an electric signal corresponding to the magnetic flux leaking between the first magnetic flux collecting protrusion 44A of the first magnetic flux collecting ring 44 and the second magnetic flux collecting protrusion of the second magnetic flux collecting ring 54. The electric signal changes according to the torsional deformation of the torsion bar 13, that is, the torsion angle of the torsion bar 13. For example, the control device of the steering device calculates the torque acting on the torsion bar 13 based on the electric signals generated by the first magnetic sensor 47A and the second magnetic sensor 47B. The torque is a physical quantity related to the rotational motion of the rotation shaft 11.

### <Configuration of Board-in Connector 45>

Next, the configuration of the board-in connector 45 will be described in detail.

As shown in FIG. 3, the board-in connector 45 includes a housing 60 and a cover 70. The housing 60 and the cover 70 are assembled together. The second end of the electric wire 46 is held by being sandwiched between the housing 60 and the cover 70. The terminal 48 is housed inside the board-in connector 45. The pin 48A protrudes from the surface of the housing 60 to which the cover 70 is attached. The first end (not shown) of the electric wire 46 is led to the outside of the board-in connector 45.

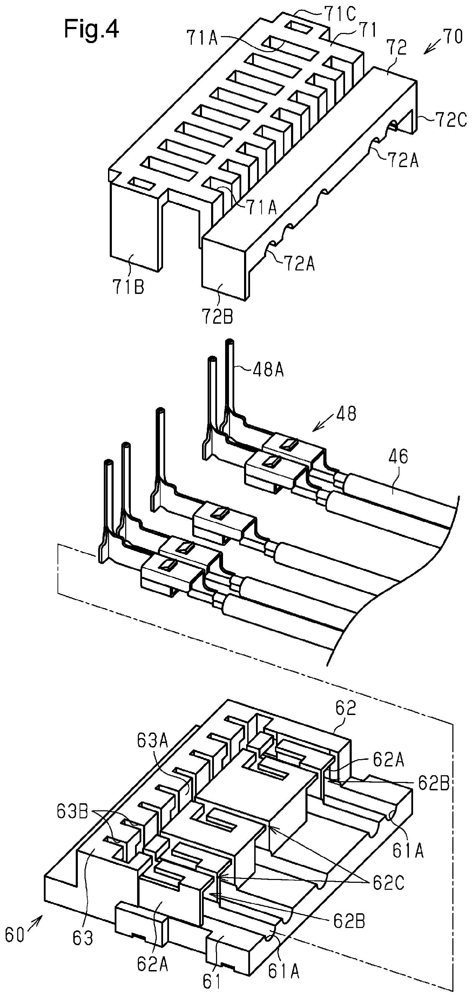

As shown in FIG. 4, the housing 60 is a rectangular parallelepiped resin molded product. The housing 60 includes a first electric wire clamping portion 61, a terminal holding portion 62, and an exposure portion 63. In a short side direction of the housing 60, the terminal holding portion 62 is positioned between the first electric wire support portion 61 and the exposure portion 63.

The first electric wire clamping portion 61 has a flat plate shape. The first electric wire clamping portion 61 has a plurality of first guide grooves 61A. The first guide groove 61A is an arcuate groove extending along the short side direction of the housing 61. The plurality of first guide grooves 61A is arranged at intervals along a long side direction of the housing 61. The first guide groove 61A supports the electric wire 47.

The terminal holding portion 62 includes a plurality of partition walls 62A. The partition wall 62A is disposed in correspondence with the first guide groove 61A. The partition wall 62A includes a first wall portion and a second wall portion. The first wall portion is a wall extending in a thickness direction of the housing 61. The second wall portion is a wall provided at the tip of the first wall portion, and extends in the long side direction of the housing 60. The partition wall 62A forms a terminal insertion portion 62B. The terminal insertion portion 62B is a rectangular parallelepiped space extending in the short side direction of the housing 61. The terminal insertion portion 62B is positioned on an extension line of the first guide groove 61A. A clearance 62C is formed between the second wall portions of two partition walls 62A adjacent to each other in the long side direction of the housing 61. The dimension of the clearance 62C is slightly larger than the outside diameter of the pin 48A of the terminal 48. The pin 48A extends in a direction orthogonal to the electric wire 47.

The exposure portion 63 has an opening 63A and a plurality of positioning grooves 63B. The opening 63A extends in the long side direction of the housing 60. The inside of the opening 63A communicates with each terminal insertion portion 62B of the terminal holding portion 62. The positioning groove 63B is provided on the inner side surface of the opening 63A opposite to the terminal holding portion 62 in the short side direction of the housing 60. The plurality of positioning grooves 63B is arranged at intervals along the long side direction of the housing 61. The positioning groove 63B is a cutaway groove that is open to the opening 63A and in the protruding direction of the partition wall 62A. The dimension of the positioning groove 63B in the long side direction of the housing 60 is the same as or slightly larger than the outside diameter of the pin 48A.

As shown in FIG. 4, the cover 70 is attached to the housing 60 from the opening 63A side. The cover 70 is a resin molded product, and includes a covering portion 71 and a second electric wire clamping portion 72.

The covering portion 71 is a portion for covering the terminal holding portion 62 of the housing 60. The covering portion 71 has an L-shaped plate shape. The covering portion 71 includes a flat plate-shaped first portion and a flat plate-shaped second portion. The first portion is a portion of the covering portion 71 for covering a tip portion including the second wall portion of the terminal holding portion 62. The second portion is a portion orthogonal to the first portion and is a portion of the covering portion 71 that covers the side surface of the terminal holding portion 62 opposite to the opening 63A.

The covering portion 71 has a plurality of resin inlet holes 71A. The resin inlet hole 71A is, for example, a rectangular hole. The resin inlet holes 71A are disposed in two rows along the long side direction of the housing 60. The resin inlet holes 71A in the first row extend through the first portion of the covering portion 71 in the thickness direction. The resin inlet holes 71A in the second row are provided at the corner of the covering portion 71. The corner is a portion where the first portion and the second portion meet. The resin inlet holes 71A in the second row extend through the first portion and the second portion of the covering portion 71 in the same direction as that for the resin inlet holes 71A in the first row.

The covering portion 71 includes a first arm portion 71B and a second arm portion 71C. The first arm portion 71B and the second arm portion 71C are provided on two side edges of the covering portion 71 positioned opposite to each other in the long side direction. The first arm portion 71B and the second arm portion 71C have flat plate shapes and extend in the attachment direction of the cover 70. The first arm portion 71B and the second arm portion 71C are provided with claws (not shown) at their tips.

The second electric wire clamping portion 72 is a portion corresponding to the first electric wire clamping portion 61 of the housing 60 and is a portion for clamping the electric wires 46 between the second electric wire clamping portion 72 and the first electric wire clamping portion 61. The second electric wire clamping portion 72 has a rectangular flat plate shape. The second electric wire clamping portion 72 has a plurality of second guide grooves 72A. The second guide groove 72A is an arcuate groove extending along a short side direction of the second electric wire clamping portion 72. The plurality of second guide grooves 72A is disposed at intervals along a long side direction of the second electric wire clamping portion 72. The second guide groove 72A is disposed at a position corresponding to the first guide groove 61A of the housing 60.

The second electric wire clamping portion 72 includes a third arm portion 72B and a fourth arm portion 72C. The third arm portion 72B and the fourth arm portion 72C are provided on two side edges of the second electric wire clamping portion 72 positioned opposite to each other in the long side direction. The third arm portion 72B and the fourth arm portion 72C have flat plate shapes and extend in the attachment direction of the cover 70. The third arm portion 72B and the fourth arm portion 72C are provided with claws (not shown) at their tips.

### <Configuration of Terminal 48>

Next, the configuration of the terminal 48 will be described in detail.

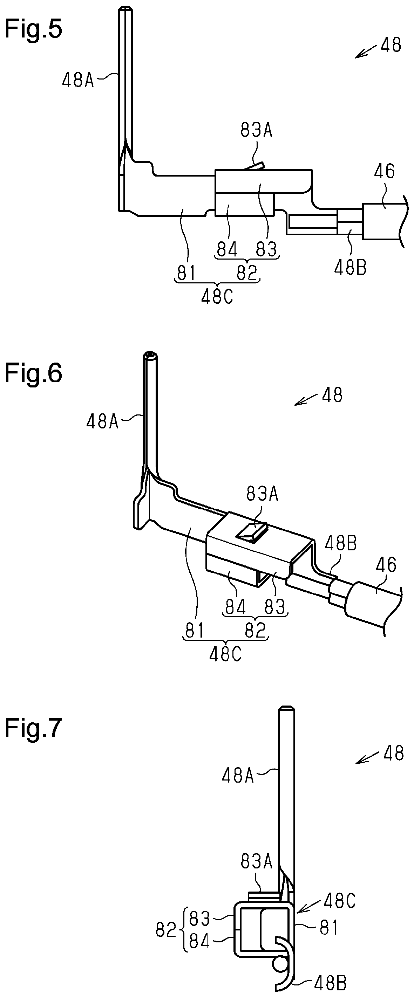

As shown in FIG. 5, the terminal 48 is formed, for example, by plastically deforming a metal plate that has been punched into a predetermined shape. The terminal 48 includes the pin 48A, a connection portion 48B, and a coupling portion 48C.

The pin 48A is provided at a first end of the terminal 48. The pin 48A has a rod shape. The pin 48A is formed, for example, by plastically deforming part of the metal plate corresponding to the pin 48A into a tubular shape having a circular cross section.

The connection portion 48B is provided at a second end of the terminal 48. The second end is the end of the terminal 48 opposite to the first end. The connection portion 48B is a portion of the terminal 48 to which the second end of the electric wire 46 is connected. At the second end of the electric wire 46, the core wire is exposed from the coating. The connection portion 48B and the electric wire 46 are connected by crimping part of the connection portion 48B so as to enclose the exposed core wire. The connection portion 48B includes a flat portion. The flat portion is a flat plate-shaped portion of the connection portion 48B that extends along the core wire exposed from the crimped part of the connection portion 48B.

The coupling portion 48C is an intermediate portion of the terminal 48 that couples the pin 48A and the connection portion 48B.
As shown in FIG. 6, the coupling portion 48C includes a coupling portion body 81 and a projecting portion 82.

The coupling portion body 81 has a rectangular flat plate shape. The short side of the coupling portion body 81 extends along the pin 48A. The long side of the coupling portion body 81 extends in a direction orthogonal to the pin 48A. A first end of the coupling portion body 81 in the long side direction is coupled to the base end of the pin 48A. The pin 48A and the coupling portion body 81 form a first corner. A second end of the coupling portion body 81 in the long side direction is coupled to the flat portion of the connection portion 48B. When viewed in a direction orthogonal to the coupling portion body 81, the coupling portion body 81 is coupled to a portion of the flat portion positioned opposite to the first guide groove 51A in a state in which the electric wire 46 is supported in the first guide groove 61A. The coupling portion body 81 and the connection portion 48B form a second corner.

The projecting portion 82 projects laterally from the coupling portion body 81. The projecting portion 82 extends in a long side direction of the coupling portion body 81 and has a tubular shape with a polygonal cross section. The projecting portion 82 includes a first projecting piece 83 and a second projecting piece 84.

The first projecting piece 83 is provided on a first long side of the coupling portion body 81. The first projecting piece 83 includes a first wall portion and a second wall portion. The first wall portion has a rectangular plate shape. The first wall portion is orthogonal to the coupling portion body 81. The second wall portion has a rectangular plate shape. The second wall portion is coupled to the end of the first wall portion opposite to the coupling portion body 81. The second wall portion is parallel to the coupling portion body 81.

The first wall portion includes a protrusion 83A. The protrusion 83A has a rectangular plate shape. The protrusion 83A is formed by lancing. That is, the protrusion 83A is formed by providing the first wall portion with cuts corresponding to three sides of the protrusion 83A and bending the remaining portion. The bending direction is opposite to the direction of the second wall portion. The protrusion 83A is open opposite to the pin 48A.

The second projecting piece 84 is provided on a second long side of the coupling portion body 81. The length of the coupling portion body 81 in the long side direction is smaller than the length of the first projecting piece 83 in the long side direction. The second projecting piece 84 includes a third wall portion and a fourth wall portion. The third wall portion has a rectangular plate shape. The third wall portion is orthogonal to the coupling portion body 81. The fourth wall portion has a rectangular plate shape. The fourth wall portion is coupled to the end of the third wall portion opposite to the coupling portion body 81. The fourth wall portion is parallel to the coupling portion body 81. The end of the fourth wall portion opposite to the third wall portion is maintained, along its entire length, in contact with the end of the second wall portion opposite to the first wall portion.

As shown in FIG. 7, the projecting portion 82 has a closed loop shape when viewed in a direction from the connection portion 48B to the pin 48A. The loop has a rectangular shape. The first projecting piece 83 and the second projecting piece 84 constitute a single tube. The tube has a polygonal cross section. FIG. 7 shows the connection portion 48B before it is crimped.

As shown in FIG. 5, the terminal 48 has a crank shape when viewed in a direction orthogonal to the direction from the connection portion 48B to the pin 48A. The crank shape is a connection of two alternating right-angle curves. The first corner formed by the pin 48A and the coupling portion body 81 and the second corner formed by the coupling portion body 81 and the connection portion 48B are portions of the terminal 48 corresponding to the right-angle curves.

### <Assembling Procedure for Board-in Connector 45>

Next, an assembling procedure for the board-in connector 45 will be described.

As shown in FIG. 4, the terminal 48 is first inserted into each terminal insertion portion 62B of the terminal holding portion 62 from the side opposite to the opening 63A. The terminal 48 is inserted into each terminal insertion portion 62B until the pin 48A reaches the end wall of the positioning groove 63B in the insertion direction. Therefore, the terminal 48 is positioned in the insertion direction of the terminal 48, that is, the short side direction of the housing 60. The positioning groove 63B includes two inner side surfaces that face each other in the long side direction of the housing 60. In the long side direction of the housing 60, the pin 48A abuts against the inner side surface of the positioning groove 63B, thereby restricting movement of the pin 48A in the long side direction of the housing 60. Therefore, the terminal 48 is positioned in the long side direction of the housing 60. The second end of the electric wire 46 is maintained in a state in which it is supported by the first guide groove 61A. In this state, the cover 70 is attached to the housing 60 from the opening 63A side.

The claws of the first arm portion 71B, the second arm portion 71C, the third arm portion 72B, and the fourth arm portion 72C of the cover 70 elastically engage with part of the housing 60 in a direction opposite to the attachment direction. This suppresses detachment of the cover 70 from the housing 60. The cover 70 is maintained in a state in which it is attached to the housing 60. Through the above, the assembling work for the board-in connector 45 is completed.

### <Assembled State of Board-in Connector 45>

Next, the assembled state of the board-in connector 45 will be described.

As shown in FIG. 3, in the state in which the cover 70 is attached to the housing 60, the exposure portion 63 is exposed to the outside without being covered with the cover 70. The pin 48A protrudes from the positioning groove 63B in the direction opposite to the attachment direction of the cover 70. The opening 63A and the terminal holding portion 62 of the housing 60 are covered with the covering portion 71. However, the opening 63A and the terminal insertion portions 62B are open to the outside via the resin inlet holes 71A of the cover 70.

In the state in which the cover 70 is attached to the housing 60, the second electric wire clamping portion 72 is maintained in a state in which it is laid over the first electric wire clamping portion 61 in the attachment direction of the cover 70. The second end of the electric wire 46 is sandwiched between the first guide groove 61A and the second guide groove 72A. This restricts movement of the second end of the electric wire 46 in a long side direction of the board-in connector 45. The second end of the electric wire 46 is held at a predetermined position.

### <Method for Manufacturing First Sensor Housing 40>

Next, a method for manufacturing the first sensor housing 40 will be described.

First, the first magnetic flux collecting ring 44 and the board-in connector 45 that are inserts are set in the open mold. The board-in connector 45 is holding the electric wires 46. Then, the mold is closed and injection molding is performed. When the mold is closed, a cavity is formed inside the mold. The cavity is a space corresponding to the outer shape of the first sensor housing 40.

Next, a molten resin is injected into the cavity. The molten resin is a synthetic resin melted by heating. Inside the mold, the first magnetic flux collecting ring 44 is enveloped in the molten resin except for its inner peripheral surface. The board-in connector 45 is enveloped in the molten resin except for at least the first end. The molten resin also flows into the terminal insertion portions 62B and the opening 63A via the resin inlet holes 71A of the cover 70.

After the cavity is filled with the molten resin, the filled molten resin is cured by cooling. Then, the mold is opened and the first sensor housing 40 that is a resin molded product is taken out. Thus, the first sensor housing 40 shown in FIG. 2, that is, the first sensor housing 40 in which the first magnetic flux collecting ring 44 and the board-in connector 45 are embedded, is obtained.

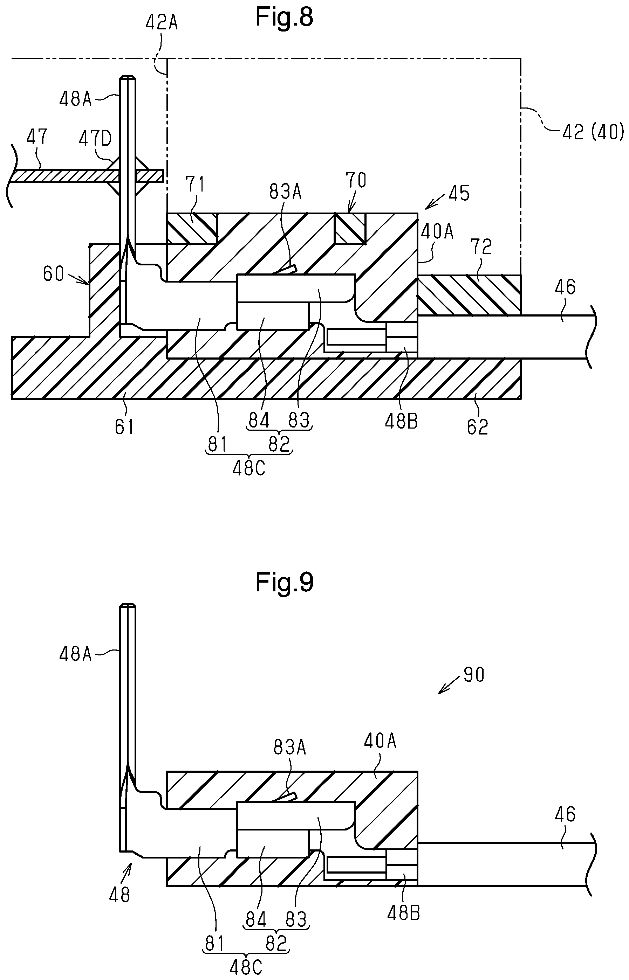

Through the above, the manufacture of the first sensor housing 40 is completed. As shown in FIG. 8, the pins 48A are inserted into the terminal connection holes 47C of the board 47 after the first sensor housing 40 is taken out of the mold. The pins 48A are joined to the board 47 by solder 47D. The pins 48A and pattern wiring on the board 47 are electrically connected.

### <Internal State of Board-in Connector 45>

The internal state of the board-in connector 45 is as follows.

As shown in FIG. 8, inside the board-in connector 45, the periphery of the coupling portion 48C of the terminal 48 is covered with the synthetic resin. That is, the opening 63A and each terminal insertion portion 62B of the housing 61 are filled with the synthetic resin. The inside of the projecting portion 82 is also filled with the synthetic resin. The clearance between the coupling portion 48C and the partition wall 62A (see FIG. 4) is also filled with the synthetic resin. The clearance 62C (see FIG. 4) between two partition walls 62A adjacent to each other in the long side direction of the housing 61 is also filled with the synthetic resin. The protrusion 83A digs into the synthetic resin. The digging direction is opposite to the direction in which the terminal 48 is inserted into the terminal insertion portion 62B. When the periphery of the coupling portion 48C is filled with the resin without leaving any clearance, the terminal 48 is held inside the terminal insertion portion 62B. FIG. 8 shows a state in which the board-in connector 45, the synthetic resin that fills the board-in connector 45, etc. are taken out imaginarily. A synthetic resin portion 40A that covers at least the periphery of the coupling portion 48C of the terminal 48 is part of the first sensor housing 40 and corresponds to a resin member.

As shown in FIG. 9, the terminal 48 and the synthetic resin portion 40A that covers at least the periphery of the coupling portion 48C of the terminal 48 constitute an insert molding product 90. FIG. 9 shows a state in which the terminal 48 and the synthetic resin that covers at least the periphery of the coupling portion 48C of the terminal 48 are taken out imaginarily.

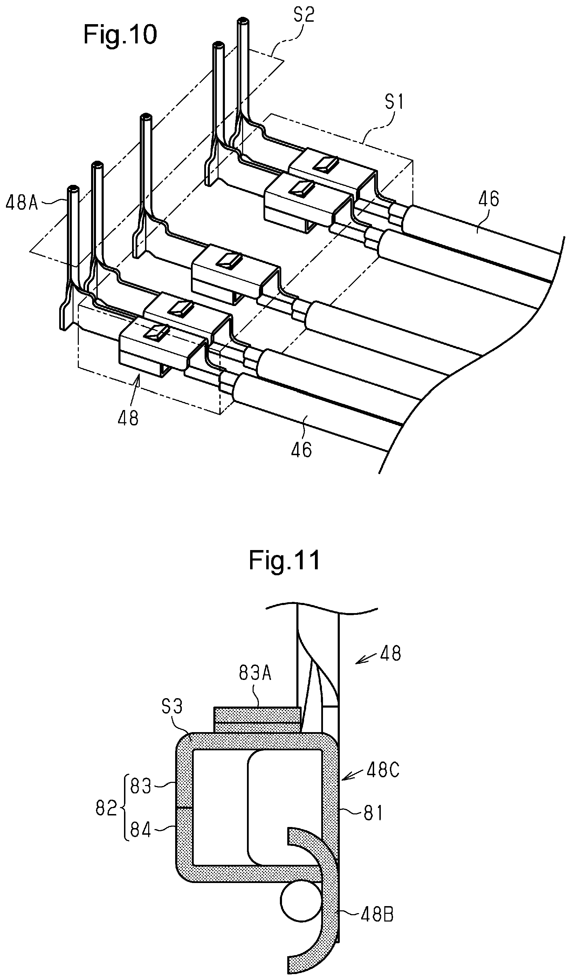

As shown in FIG. 10, each terminal 48 is covered with the synthetic resin in a first range S1. The first range S1 is a rectangular parallelepiped range including the opening 63A of the exposure portion 63 and the terminal holding portion 62. Each pin 48A is connected to the board 47 in a second range S2. The second range is a rectangular range including each terminal connection hole 47 of the board 47.

### <Functions of Embodiment>

The present embodiment has the following functions.

When the sensor device 10 is mounted on, for example, a steering device or when the steering device is mounted on a vehicle, an external force may be applied to the electric wire 46 due to wire connection work for the electric wire 46, etc. The external force includes a tensile force. The tensile force is a force in a direction in which the electric wire 46 is pulled out of the board-in connector 45. The direction in which the electric wire 46 is pulled out is opposite to the direction in which the terminal 48 is inserted into the terminal insertion portion 62B. When the tensile force is applied to the electric wire 46, the portion of the terminal 48 that is oriented in the pulling direction engages with the synthetic resin that covers the periphery of the terminal 48. In particular, the projecting portion 82 projects laterally from the coupling portion body 81, and can therefore easily engage with the synthetic resin.

As shown by many dots in FIG. 11, in a projection region S3 in which the terminal 48 is projected in a direction opposite to the pulling direction, the terminal 48 engages with the synthetic resin that covers its periphery. In the direction in which the electric wire 46 is pulled out, the synthetic resin that covers the periphery of the terminal 48 receives a pressure according to the tensile force via the projection region S3 of the terminal 48. The projection region S3 is a region including the coupling portion 48C. Therefore, the area of the projection region S3 is larger by the area of the end face of the projecting portion 80 than in a case where a configuration in which the projecting portion 80 is omitted is adopted as the coupling portion 48C.

Therefore, the tensile force is appropriately received by the synthetic resin that covers the periphery of the terminal 48 via the projection region S3 of the terminal 48. That is, the tensile force is appropriately released by being transmitted to the synthetic resin that covers the periphery of the terminal 48 via the projection region S3 of the terminal 48. This suppresses direct transmission of the tensile force to the connection portion between the pin 48A and the board 47. This suppresses the effect of the tensile force on the connection portion between the pin 48A and the board 47. For example, the tensile force is less likely to be transmitted to the pin 48A, thereby suppressing stress generation at the connection portion between the pin 48A and the board 47. Further, the change in the position of the pin 48A relative to the board 47 is reduced.

### <Effects of Embodiment>

The present embodiment has the following effects.
(1) The coupling portion 48C of the terminal 48 includes the projecting portion 82 that projects laterally from the coupling portion body 81. The periphery of the coupling portion 48C is covered with the synthetic resin. Therefore, when the tensile force is applied to the electric wire 46, the portion of the terminal 48 that is oriented in the pulling direction of the electric wire 46 engages with the synthetic resin that covers the periphery of the terminal 48. In particular, the projecting portion 82 projects laterally from the coupling portion body 81, and can therefore easily engage with the synthetic resin. The portion of the terminal 48 that engages with the synthetic resin is the projection region S3 in which the terminal 48 is projected in the direction opposite to the pulling direction. The area of the projection region S3 is increased by the amount corresponding to the provided projecting portion 80. Therefore, the tensile force is appropriately received by the synthetic resin that covers the periphery of the terminal 48 via the projection region S3 of the terminal 48. Since the direct transmission of the tensile force to the connection portion between the pin 48A and the board 47 is suppressed, the effect of the tensile force on the connection portion between the pin 48A and the board 47 is suppressed. Further, the resistance of the electric wire 46 to pulling is improved.
(2) The projecting portion 80 has the closed loop shape when viewed in the direction from the connection portion 48B to the pin 48A. Therefore, when the first sensor housing 40 is manufactured, the molten resin easily enters the inside of the connection portion 80. It can also contribute to the expansion of the projection region S3 of the terminal 48.
(3) The coupling portion 48C includes the coupling portion body 81 that couples the pin 48A and the connection portion 48B. The coupling portion body 81 has the plate shape including the first long side extending along the direction from the connection portion 48B to the pin 48A, and the second long side parallel to the first long side. The projecting portion 82 includes the first projecting piece 83 provided on the first long side, and the second projecting piece 84 provided on the second long side. The first projecting piece 83 and the second projecting piece 83 are provided so as to constitute a single tube. Therefore, the tubular projecting portion 82 can easily be formed from the first projecting piece 83 and the second projecting piece 83.
(4) The terminal 48 is formed by plastically deforming a single metal plate. The projecting portion 82 is formed by plastically deforming portions of the metal plate corresponding to the first projecting piece 83 and the second projecting piece 84. Therefore, the terminal 48, including the projecting portion 82, can be manufactured easily.
(5) The opening 63A and each terminal insertion portion 62B of the housing 61 are filled with the synthetic resin without leaving any clearance. This suppresses entry of dust etc. to the inside of the board-in connector 45. The dust-proofness of the board-in connector 45 can be improved.

### <Other Embodiments>

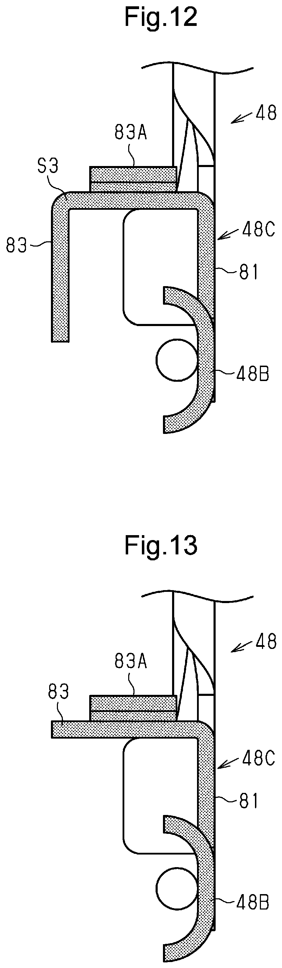

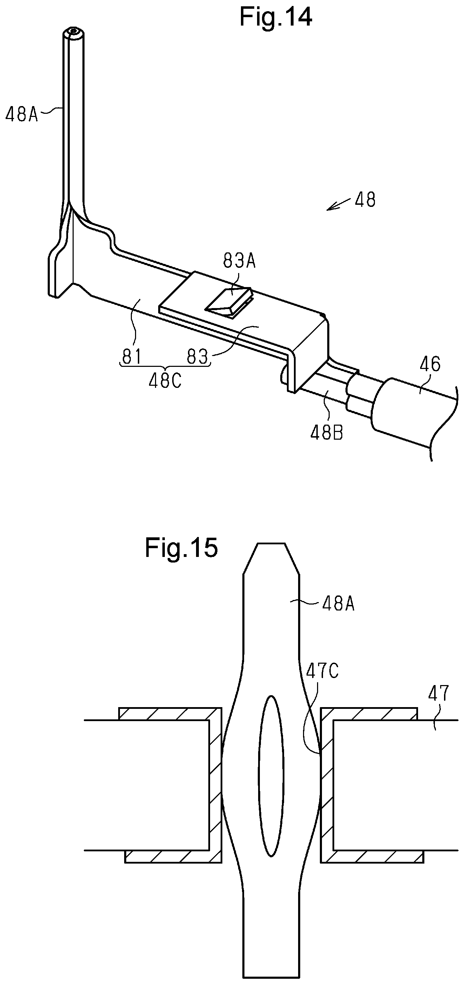

The present embodiment may be modified as follows.
- As shown in FIG. 12, a configuration in which the projecting portion 80 includes only the first projecting piece 83 may be adopted. The second wall portion of the first projecting piece 83 may be provided so as to extend slightly in the direction opposite to the protrusion 83A. The second wall portion is a wall portion of the first projecting piece 83 that is parallel to the coupling portion body 81.
   - As shown in FIG. 13, a configuration in which the projecting portion 80 includes only the first projecting piece 83 may be adopted. The first projecting piece 83 may include only the first wall portion. The first wall portion is a wall portion of the first projecting piece 83 that is orthogonal to the coupling portion body 81.
   - As shown in FIG. 14, a configuration in which the projecting portion 80 includes only the first projecting piece 83 may be adopted. The second wall portion of the first projecting piece 83 may be provided at the end of the first wall portion opposite to the pin 48A.
   - Contrary to the projecting portions 80 shown in FIGS. 12 and 13, a configuration in which the projecting portion 80 includes only the second projecting piece 84 may be adopted.
- As shown in FIG. 15, the pin 48A may be a press-fit terminal. The press-fit terminal is a terminal that can be connected to the board 47 simply by being press-fitted to the terminal connection hole 47C of the board 47. The press-fit terminal is held in the terminal connection hole 47C by a restoring force generated by elastic deformation caused by press-fitting. In this way, soldering is not required.
   - The sensor device 10 may be a rotation angle sensor that detects the rotation angle of the rotation shaft 11. In this case, for example, a driving gear is attached to the outer peripheral surface of the rotation shaft 11 so as to be rotatable together with the rotation shaft 11. Two driven gears are rotatably supported in the board housing portion 42A of the first sensor housing 40. The driven gears have different numbers of teeth. The board 47 is provided with sensors that generate electric signals according to the rotation angles of the driven gears. The driven gears mesh with the driving gear via an opening provided in a portion of the first sensor housing 40 between the board housing portion 42A and the first insertion hole 43. Therefore, the two driven gears rotate in conjunction with the rotation of the driving gear. Since the two driven gears have different numbers of teeth, the rotation angles of the two driven gears relative to the rotation angle of the driving gear are different. Therefore, the electric signals generated by the first sensor and the second sensor have different phases. For example, the control device of the steering device detects the rotation angle of the rotation shaft 11 based on the electric signals generated by the first sensor and the second sensor.
   - As used herein, the term "tube" or "tubular" may refer to any structure including a peripheral wall. The term "tube" or "tubular" may refer to, but not limited to, any structure having, for example, a circular, elliptical, or angled or rounded polygonal cross section.

## Claims

1. An insert molding product comprising a terminal configured to be connected to a board, and a resin member that covers part of the terminal, wherein
the terminal includes a pin configured to be connected to the board, a connection portion configured such that an electric wire is connected, and a coupling portion that couples the pin and the connection portion,
the coupling portion includes a projecting portion that projects laterally in a direction orthogonal to a direction from the connection portion to the pin, and
the resin member covers at least the coupling portion of the terminal.

2. The insert molding product according to claim 1, wherein the projecting portion has a closed loop shape when viewed in the direction from the connection portion to the pin.

3. The insert molding product according to claim 2, wherein
the coupling portion includes a coupling portion body that couples the pin and the connection portion,
the coupling portion body has a plate shape including a first long side extending along the direction from the connection portion to the pin, and a second long side parallel to the first long side,
the projecting portion includes a first projecting piece provided on the first long side, and a second projecting piece provided on the second long side, and
the first projecting piece and the second projecting piece are provided so as to constitute a single tube.

4. The insert molding product according to claim 3, wherein
the terminal is formed by plastically deforming a single metal plate, and
the projecting portion is formed by plastically deforming portions of the metal plate corresponding to the first projecting piece and the second projecting piece.

5. A sensor device comprising the insert molding product according to any one of claims 1 to 4.

## Amended claims

### Amended claims under Art. 19.1 PCT

1. An insert molding product comprising a terminal configured to be connected to a board, and a resin member that covers part of the terminal, wherein
the terminal includes a pin configured to be connected to the board, a connection portion configured such that an electric wire is connected, and a coupling portion that couples the pin and the connection portion,
the coupling portion includes a projecting portion that projects laterally in a direction orthogonal to a direction from the connection portion to the pin,
the resin member covers at least the coupling portion of the terminal,
the projecting portion has a closed loop shape when viewed in the direction from the connection portion to the pin,
the coupling portion includes a coupling portion body that couples the pin and the connection portion,the coupling portion body has a plate shape including a first long side extending along the direction from the connection portion to the pin, and a second long side parallel to the first long side,
the projecting portion includes a first projecting piece provided on the first long side, and a second projecting piece provided on the second long side, and
the first projecting piece and the second projecting piece are provided so as to constitute a single tube.

2. The insert molding product according to claim 1, wherein
the terminal is formed by plastically deforming a single metal plate, and
the projecting portion is formed by plastically deforming portions of the metal plate corresponding to the first projecting piece and the second projecting piece.

3. A sensor device comprising the insert molding product according to claim 1 or 2.
